# EUROPÄISCHE PATENTANMELDUNG

(11) **EP 4 382 004 A1**
(43) Veröffentlichungstag der Anmeldung: **12.06.2024**
(21) Anmeldenummer: 22211423.3
(22) Anmeldetag: 05.12.2022
(51) Int. Cl.: A47J 27/00, A47J 36/32

(54) **KÜCHENGERÄT UND VERFAHREN ZUM ERHITZEN EINES LEBENSMITTELS**

(71) Anmelder: Vorwerk & Co. Interholding GmbH, 42270 Wuppertal (DE)
(72) Erfinder: TIETZ, Sebastian, 51379 Leverkusen (DE); DÖRNER, Maria, 50764 Köln (DE); REIß, Simon, 51688 Wipperfürth (DE)
(74) Vertreter: Gille Hrabal Partnerschaftsgesellschaft mbB Patentanwälte

(57) **Zusammenfassung**

Die Erfindung betrifft ein Küchengerät und ein Verfahren für ein Erhitzen von Lebensmitteln unter erhöhtem Druck in einem Speisenzubereitungsgefäß sowie eine Verwendung eines Messwerts eines Temperatursensors. Ein Küchengerät (7) für ein Erhitzen von Lebensmitteln unter erhöhtem Druck in einem Speisenzubereitungsgefäß (8) umfasst eine Wand (16), einen Temperatursensor (5) zum Messen der Temperatur der Wand (16) und eine Steuereinrichtung (17). Die Steuereinrichtung (17) ist dazu eingerichtet, unter Verwendung eines Messwerts des Temperatursensors (5) einen Soll-Druck im Speisenzubereitungsgefäß (8) einzustellen. Das Küchengerät ist somit in der Lage, mittels eines Temperatursensors einen Druck zu steuern. Auf diese Weise kann auf einen Druckfühler und einen Temperatursensor im Garraum verzichtet werden. Dies verringert die technische Komplexität, die Fehleranfälligkeit und den Herstellungsaufwand des Küchengeräts.

## Beschreibung

Die Erfindung betrifft ein Küchengerät und ein Verfahren für ein Erhitzen von Lebensmitteln unter erhöhtem Druck in einem Speisenzubereitungsgefäß sowie eine Verwendung eines Temperatursensors.

Schnellkochtöpfe werden genutzt, um Speisen bei erhöhtem Druck zu garen. Weil dabei höhere Temperaturen erreicht werden als die Siedetemperatur des Wassers in offenen Töpfen, kann so die Garzeit signifikant verringert werden. Zudem kann Energie eingespart werden.

Dieser Effekt kann auch in halb- und vollautomatischen Küchengeräten genutzt werden. Um den Druck zu messen und/oder zu steuern wird hierbei typischerweise ein Drucksensor im Inneren des Speisenzubereitungsgefäßes angeordnet. DE 42 38 522 A1 offenbart beispielsweise einen Schnellkochtopf mit einem elektronischen Druckaufnehmer, der in den Dampfraum hineinragt und mit einer elektronischen Datenkommunikation zum jeweiligen Plattenbetriebsschalter die Energiezufuhr automatisch reguliert. Dies ist jedoch mit technischem Aufwand verbunden. Zudem sind derartige Sensoren fehleranfällig und erschweren die Reinigung. Alternativ kann ein Drucksensor im Deckel des Speisenzubereitungsgefäßes vorgesehen werden. Dies setzt allerdings eine Kommunikation zwischen Küchengerät und Deckel voraus, beispielsweise in Form einer Signal-übermittlung, was ebenfalls technisch aufwändig ist.

Der Erfindung liegt die Aufgabe zugrunde, einen Druck für eine Speisenzubereitung auf verbesserte Weise einzustellen.

Die Aufgabe wird gelöst durch das Küchengerät gemäß Anspruch 1 sowie durch das Verfahren und die Verwendung gemäß den nebengeordneten Ansprüchen. Vorteilhafte Ausgestaltungen sind in den Unteransprüchen angegeben.

Ein Küchengerät für ein Erhitzen von Lebensmitteln unter erhöhtem Druck in einem Speisenzubereitungsgefäß dient zur Lösung der Aufgabe. Das Küchengerät umfasst eine Wand, mindestens einen Temperatursensor zum Messen der Temperatur der Wand und eine Steuereinrichtung. Die Steuereinrichtung ist dazu eingerichtet, unter Verwendung eines Messwerts des Temperatursensors einen Soll-Druck im Speisenzubereitungsgefäß einzustellen.

Die Erfindung beruht auf der Erkenntnis, dass im Inneren eines druckbeaufschlagten Systems eine Korrelation zwischen Druck und Temperatur vorliegt. Es wird eine Vorrichtung bereitgestellt, die sich diesen Effekt zunutze macht, um mittels eines Temperatursensors einen Druck zu steuern. Auf diese Weise kann auf einen Druckfühler und/oder einen Temperatursensor im Garraum verzichtet werden. Dies verringert die technische Komplexität, die Fehleranfälligkeit und den Herstellungsaufwand des Küchengeräts. Insbesondere wird zur Druckregelung ein Temperatursensor verwendet, der die Temperatur einer Wand misst. Bevorzugt ist überhaupt kein Sensor im Inneren des Speisenzubereitungsgefäßes notwendig.

Ein Küchengerät ist grundsätzlich ein Gerät, mit dem Arbeiten in der Küche durchgeführt werden können, insbesondere zur Zubereitung von Speisen. Das Speisenzubereitungsgefäß dient der Aufnahme eines oder mehrerer zu erhitzender Lebensmittel, sodass diese im Speisenzubereitungsgefäß unter erhöhtem Druck erhitzt werden können. Typischerweise begrenzt die Wand das Speisenzubereitungsgefäß zumindest teilweise. Die Wand kann dabei an beliebiger Stelle des Speisenzubereitungsgefäßes angeordnet sein. Bevorzugt grenzt die Wand ein Inneres des Speisenzubereitungsgefäßes gegenüber der Umgebung ab. Insbesondere umfasst das Küchengerät das Speisenzubereitungsgefäß. Insbesondere ist ein Deckel für das Speisenzubereitungsgefäß vorgesehen. Der Deckel ist typischerweise so ausgestaltet, dass ein erhöhter Druck im Speisenzubereitungsgefäß eingestellt werden kann. Bevorzugt kann der Deckel das Speisenzubereitungsgefäß demnach dicht verschließen. Erhöhter Druck meint einen Druck, der zum Garen von Speisen nach dem Prinzip eines Schnellkochtopfes benötigt wird. Typischerweise ist ein absoluter Druck zwischen 1,3 bar und 3 bar gemeint, insbesondere zwischen 1,5 bar und 2,2 bar. Dies entspricht bei Atmosphärendruck von 1 bar also einem Überdruck zwischen 0,3 bar und 2 bar gemeint, insbesondere zwischen 0,5 bar und 1,2 bar.

Der Temperatursensor misst die Temperatur der Wand. So kann auf jede Art von Sensor im Inneren des Speisenzubereitungsgefäßes verzichtet werden. Das Messen der Temperatur der Wand meint ein Detektieren eines Messwertes, der eine Aussage über die Temperatur erlaubt. Insbesondere ist der Temperatursensor so eingerichtet, dass er als Messwert eine elektrische Spannung oder einen elektrischen Strom detektiert, der mit der Temperatur korreliert. Aus diesem Messwert kann mittels einer geeigneten Umrechnung ein Temperaturwert bestimmt werden. Dies ist allerdings nicht notwendig. Es ist ebenso möglich, dass die Steuereinrichtung den Messwert direkt verwendet, um einen Soll-Druck einzustellen. Unabhängig davon kann ein Temperaturwert ermittelt werden, um diesen für einen Benutzer auszugeben, z. B. über ein Display.

Das Einstellen des Soll-Drucks meint ein Beeinflussen eines Ist-Drucks dahingehend, dass sich der Ist-Druck dem Soll-Druck annähert oder angleicht. Ein Soll-Druck ist ein gewünschter Druck. Der Ist-Druck ist ein tatsächlich vorhandener Druck im Inneren des Speisenzubereitungsgefäßes. Das Beeinflussen des Ist-Druckes führt also dazu, dass der Ist-Druck verändert, also erhöht und/oder verringert wird. Insbesondere erfolgt eine Einflussnahme auf den derzeitigen Ist-Druck dahingehend, dass sich der Soll-Druck im Speisenzubereitungsgefäß möglichst exakt einstellt.

Der Soll-Druck wird unter Verwendung des Messwerts eingestellt. Die Verwendung des Messwerts erlaubt eine besonders vorteilhafte Einstellung des Soll-Drucks. Insbesondere gibt die Steuereinrichtung eine Steuergröße zur Beeinflussung des Drucks im Speisenzubereitungsgefäß aus. Die Steuergröße wird an eine Funktionskomponente ausgegeben, die geeignet ist, den Druck im Speisenzubereitungsgefäß zu beeinflussen. Die Steuereinrichtung kann dazu eingerichtet sein, die Steuergröße zu ermitteln.

Der Soll-Druck kann beispielsweise von einem Benutzer, einem elektronischen Rezept oder einer Steuereinrichtung vorgegeben werden. Das Küchengerät kann einen Speicher zum Speichern des elektronischen Rezepts und/oder des Soll-Drucks aufweisen. Dabei kann es sich um eine Speichereinheit der Steuereinrichtung handeln. Alternativ oder ergänzend kann das Küchengerät eine Kommunikationsschnittstelle aufweisen, mit welcher die Steuereinrichtung auf das elektronische Rezept und/oder den Soll-Druck zugreifen kann. Das elektronische Rezept kann digital gespeichert sein. In diesem Fall kann das elektronische Rezept an einem entfernten Ort gespeichert sein und es kann eine geeignete Kommunikation hergestellt werden.

In einer Ausgestaltung umfasst das Küchengerät eine Heizeinrichtung. Insbesondere ist die Steuereinrichtung dazu eingerichtet, einen Ist-Druck im Speisenzubereitungsgefäß durch Steuern der Heizeinrichtung zu beeinflussen.

Die Heizeinrichtung dient zum Erhitzen des Lebensmittels und/oder des Speisenzubereitungsgefäßes und umfasst insbesondere einen oder mehrere Heizleiter. Die Heizeinrichtung ist eine Funktionskomponente des Küchengeräts. Wird mittels der Heizeinrichtung geheizt, bei erhöhter Leistung geheizt oder ein Heizintervall verringert, kann ein Ist-Druck erhöht werden. Wird mittels der Heizeinrichtung eine Heizleistung beim Heizen verringert, ein Heizen unterbrochen oder ein Heizintervall erhöht, kann ein Ist-Druck verringert werden. Ist eine Heizeinrichtung vorhanden, kann die Steuereinrichtung als Steuergröße eine Soll-Temperatur vorgeben.

Die Heizeinrichtung und/oder ein oder mehrere Heizleiter kann bzw. können in oder an der Wand angeordnet sein. Das Einstellen der Soll-Temperatur kann beispielsweise durch entsprechende Steuerung oder Regelung der Heizeinrichtung erfolgen.

In einer Ausgestaltung ist die Wand, in welcher der Temperatursensor die Temperatur misst, ein Boden des Speisenzubereitungsgefäßes. Dem liegt die Erkenntnis zugrunde, dass sich eine gleichmäßige Temperatur im gesamten System einstellt, die eine Aussage über den Druck erlaubt. Somit kann auch am Boden des Speisenzubereitungsgefäßes, der typischerweise nicht unmittelbar mit dem Dampf in Kontakt ist, sondern stattdessen mit einem flüssigen und/oder festen Speisenanteil, eine repräsentative Temperatur des Systems gemessen werden. Die Anordnung des Temperatursensors am Boden ist mit besonders geringem technischem Aufwand möglich.

In einer Ausgestaltung sind mehrere Soll-Drücke vorgesehen. Insbesondere ist die Steuereinrichtung so eingerichtet, dass je nach gewünschtem Soll-Druck ein bestimmter Steuergröße wie z. B. eine bestimmte Soll-Temperatur vorgegeben wird. Die mehreren Soll-Drücke können beispielsweise als unterschiedliche Druckstufen von der Steuereinrichtung vorgegeben oder hinterlegt sein. Es kann beispielswiese zwei, drei, vier oder mehr Druckstufen geben. Der gewünschte Soll-Druck bzw. die gewünschte Druckstufe kann beispielsweise vom Benutzer oder von einem elektronisch gespeicherten Rezept vorgegeben werden, etwa in Abhängigkeit des zu erhitzenden Lebensmittels. Die Steuereinrichtung kann dann die Steuergröße so einstellen, dass der gewünschte Druck im Speisenzubereitungsgefäß erreicht wird.

In einer Ausgestaltung sind der Temperatursensor und die Heizeinrichtung thermisch im Wesentlichen entkoppelt. Mit anderen Worten ist das Küchengerät so ausgebildet, dass eine direkte Beeinflussung der vom Temperatursensor gemessenen Temperatur durch die Heizeinrichtung weitgehend verhindert wird. Der Anteil der vom Temperatursensor gemessenen Wärme, die direkt von der Heizeinrichtung stammt, fällt gegenüber der vom Temperatursensor gemessenen Wärme, die von der Wand des Küchengeräts stammt, höchstens geringfügig ins Gewicht, beträgt beispielsweise weniger als 10% der insgesamt gemessenen Wärme. Der Temperatursensor kann also auch während des Erhitzens durch die Heizeinrichtung und unabhängig davon recht genau die Temperatur ermitteln, der ein Lebensmittel ausgesetzt wird.

Die Entkopplung kann zumindest anteilig beispielsweise dadurch erreicht werden, dass ein deutlicher Abstand zwischen einer Heizeinrichtung, beispielsweise einem Heizleiter, und dem Temperatursensor vorgesehen ist. Ein solcher Abstand kann größer sein als 5 mm, insbesondere größer als 6,5 mm, bevorzugt größer als 8 mm und/oder kleiner als 35 mm, insbesondere als 20 mm und bevorzugt kleiner als 15 mm. Der Abstand beschreibt die lichte Weite zwischen dem Temperatursensor und dem Heizleiter.

Die Entkoppelung kann zumindest anteilig beispielsweise dadurch erreicht werden, dass ein gut wärmeleitfähiges Material wie z. B. Aluminium um den Temperatursensor herum ausgelassen wird. Das gut wärmeleitfähige Material kann beispielsweise eine zweite Schicht sein. Beispielsweise ist der Temperatursensor direkt an der mit dem Lebensmittel in Kontakt stehenden ersten Schicht angeordnet und die Heizeinrichtung befindet sich auf einer zweiten Schicht, welche eine Unterseite der ersten Schicht kontaktiert. Es kann in der zweiten Schicht eine z. B. kreisrunde Aussparung mit einem Durchmesser von 25 mm vorhanden sein, in welcher der Temperatursensor mittig angeordnet ist.

In einer Ausgestaltung regelt die Steuereinrichtung den Druck im Speisenzubereitungsgefäß. Insbesondere wird der Messwert des Temperatursensors als Regelgröße verwendet. Insbesondere wird eine Führungsgröße ausgegeben, um den Druck im Speisenzubereitungsgefäß zu beeinflussen. Der Ist-Druck nähert sich so dem benötigten Soll-Druck an und der Soll-Druck wird eingestellt.

Bei einer Regelung (geschlossener Regelkreis) wird eine variable Größe, die Regelgröße, fortlaufend erfasst, mit einer anderen variablen Größe, der Führungsgröße, verglichen und im Sinne einer Angleichung an die Führungsgröße beeinflusst. Der Messwert (Ist-Temperatur) dient dann als Regelgröße. Die Führungsgröße ist typischerweise eine Soll-Temperatur. Die vom Temperatursensor gemessene Temperatur wird also geregelt, beispielsweise auf der Basis einer vorgegebenen Soll-Temperatur.

Insbesondere ist die Steuereinrichtung so eingerichtet, dass die Regelung zumindest im Wesentlichen ohne Überschwinger erfolgt. So wird keine unnötige Druckerhöhung bzw. Druckspitze erzeugt. Beispielsweise wird zu diesem Zweck die Führungsgröße so geregelt, dass ein Messwert eines zweiten Temperatursensors, der die Temperatur nahe der Heizeinrichtung misst und der weiter unten beschrieben ist, begrenzt ist. Beispielsweise kann ein bestimmter Wert als Begrenzung genutzt werden. Es kann sich um einen vorbestimmten festen Wert handeln. Alternativ kann der bestimmte Wert durch die Steuereinrichtung vorgegeben werden. Der bestimmte Wert kann in Abhängigkeit des Messwerts des Temperatursensors ermittelt werden..

Die Steuereinrichtung kann in einer Ausführungsform den Druck im Speisenzubereitungsgefäß überwachen. Die Steuereinrichtung kann anhand des Messwerts den Druck im Speisenzubereitungsgefäß ermitteln und ggf. mit dem Soll-Druck vergleichen.

In einer Ausgestaltung umfasst die Wand eine äußere erste Schicht. Insbesondere kontaktiert der Temperatursensor die erste Schicht. Mit Schicht ist eine flächenhaft ausgebreitete Masse eines Stoffes gemeint. Die erste Schicht ist eine äußere Schicht und damit von außen sichtbar und von außen erreichbar. Bevorzugt bildet die erste Schicht eine im Inneren des Speisenzubereitungsgefäßes liegende Oberfläche aus, die das Lebensmittel kontaktiert. Insbesondere befindet sich der Temperatursensor in der Wand.

Kontaktiert der erste Temperatursensor die erste Schicht, dann gibt es eine unmittelbare körperliche Verbindung zwischen dem ersten Temperatursensor und der ersten Schicht. Durch das Kontaktieren wird erreicht, dass mit dem ersten Temperatursensor eine Temperatur der ersten Schicht gemessen werden kann, oder zumindest eine Temperatur, die der Temperatur der ersten Schicht nahekommt. Der erste Temperatursensor kann damit eine Information darüber liefern, welche Temperatur auf ein Lebensmittel während seiner Zubereitung einwirkt.

In einer Ausführungsform wird der Temperatursensor durch eine Feder an die erste Schicht gedrückt. In einer Ausführungsform ist der Temperatursensor nicht zwischen zwei Heizleiterbahnen angeordnet. In einer Ausführungsform ist der Temperatursensor am Rand oder nahe einem Rand der Wand angeordnet. Die erste Schicht kann aus Stahl bestehen. Die erste Schicht kann aus einem Edelstahl bestehen. Sämtliche außen liegenden Flächen der Wand können aus Stahl, so zum Beispiel aus Edelstahl, bestehen. Die Wand wird dadurch vorteilhaft besonders stabil und beständig. Durch die Feder wird eine gute thermische Anbindung durch eine ausreichende große Anpresskraft sichergestellt, sodass keine großen Wärmewiderstände in Form von Luftbrücken entstehen können und somit wird das Messignal nicht verzögert bzw. durch einen Offset verfälscht.

In einer Ausführungsform weist die erste Schicht im Bereich des Temperatursensors eine Aussparung auf, wobei der Temperatursensor die Temperatur im Bereich der Aussparung misst. Mit anderen Worten ist im Bereich des Temperatursensors lokal eine geringere Schichtdicke vorhanden. Der Temperatursensor kann so besonders exakt die Temperatur im Inneren des Speisenzubereitungsgefäßes messen. Die Aussparung befindet sich insbesondere an der der Speise abgewandten unteren Seite der ersten Schicht. Die Aussparung kann als Sackloch ausgeführt sein.

In einer Ausgestaltung befindet sich eine zweite Schicht der Wand zwischen der ersten Schicht und der Heizeinrichtung. Die Wand kann eine zweite Schicht umfassen. Die zweite Schicht trennt dann die Heizeinrichtung von der ersten Schicht. Es gibt dann keinen unmittelbaren Kontakt zwischen der Heizeinrichtung und der ersten Schicht. Grundsätzlich ist die zweite Schicht in der Wand angeordnet und damit von außen nicht erreichbar und grundsätzlich auch nicht sichtbar. Die zweite Schicht ist also dann keine äußere Schicht der Wand. Die zweite Schicht kann zur Leitung und/oder Verteilung der von der Heizeinrichtung abgegebenen Wärme dienen. Die zweite Schicht ist insbesondere aus einem Material mit hoher Wärmeleitfähigkeit hergestellt, beispielsweise Aluminium und/oder Kupfer umfassen oder daraus hergestellt sein.

In einer Ausgestaltung ist ein zweiter Temperatursensor vorhanden, um die Temperatur im Bereich der Heizeinrichtung zu messen. Die Temperatur im Bereich einer Heizeinrichtung meint eine Temperatur nahe der Heizeinrichtung. Diese Temperatur wird also maßgeblich von der Temperatur bzw. vom Zustand der Heizeinrichtung beeinflusst. Heizt die Heizeinrichtung, wird eine hohe Temperatur gemessen. Heizt die Heizeinrichtung nicht, wird eine geringe Temperatur gemessen. Typischerweise ist der Abstand zwischen der Heizeinrichtung und dem zweiten Temperatursensor nicht größer als 20 mm, insbesondere als 15 mm, bevorzugt als 10 mm und besonders bevorzugt als 5 mm. Der Abstand kann typischerweise größer als 0 mm und bevorzugt größer als 2 mm sein. Der Abstand meint die lichte Weite zwischen dem zweiten Temperatursensor und dem Heizleiter.

In einer Ausführungsform sind der zweite Temperatursensor und das Speisenzubereitungsgefäß thermisch im Wesentlichen entkoppelt. Mit anderen Worten ist eine direkte Beeinflussung der vom zweiten Temperatursensor gemessenen Temperatur durch die erste Schicht der Wand und/oder die Speise im Speisenzubereitungsgefäß minimal. Bevorzugt ist der zweite Temperatursensor räumlich getrennt von der ersten Schicht angeordnet.

Durch den zweiten Temperatursensor wird eine Temperatur ermittelt, die im Inneren der Wand herrscht. Der zweite Temperatursensor kann damit eine Information darüber liefern, wie sich die Temperatur der ersten Schicht und damit auch der Wand verändern wird. Insgesamt kann daher verbessert abgeschätzt werden, wie sich die Temperatur der ersten Schicht und damit auch der Wand verhalten wird. Dies kann genutzt werden, um ein Lebensmittel in besonders geeigneter Weise erhitzen zu können. Es kann beispielsweise eine Restwärme ausgenutzt werden, um den Energiebedarf für eine Zubereitung eines Lebensmittels durch Erhitzen zu minimieren.

In einer Ausgestaltung ist die Steuereinrichtung dazu eingerichtet, eine in Abhängigkeit einer Eigenschaft des Küchengeräts oder des Temperatursensors korrigierte Steuergröße auszugeben. Alternativ oder ergänzend ist die Steuereinrichtung dazu eingerichtet, eine in Abhängigkeit einer Eigenschaft des zu erhitzenden Lebensmittels korrigierte Steuergröße auszugeben. Mit anderen Worten wird eine ermittelte Steuergröße vor der Ausgabe durch die Steuereinrichtung korrigiert.

Die derart korrigierte Steuergröße wird verwendet, um den Soll-Druck im Speisenzubereitungsgefäß einzustellen. Dem liegt die Erkenntnis zugrunde, dass die Einstellung des Soll-Drucks von den Eigenschaften des Küchengeräts, des Temperatursensors und/oder des Lebensmittels abhängt. Typischerweise ist die Steuereinrichtung dazu eingerichtet, die Steuergröße entsprechend zu korrigieren, beispielsweise durch Multiplikation mit einem geeigneten Korrekturfaktor.

Beispielsweise liefern unterschiedliche Aufbauten des Temperatursensors, etwa unterschiedliche Sensortypen oder unterschiedliche Materialien eines Temperaturfühlers, und unterschiedliche Positionen des Temperatursensors unterschiedliche Messergebnisse. Die Eigenschaft kann demnach z. B. der Sensortyp, ein Material eines Temperaturfühlers oder eine Position des Temperatursensors sein. Beispielsweise liefern unterschiedlich aufgebaute Wände oder Speisenzubereitungsgefäße unterschiedliche Messergebnisse. So kann der Wärmeübergang je nach Aufbau, Schichtdicken, Materialien, und Anordnung der Schichten im Speisenzubereitungsgefäß variieren. Ist der Temperatursensor besonders nah an der mit dem Lebensmittel in Kontakt stehenden Oberfläche angeordnet, ist die Wärmleitfähigkeit von der Heizeinrichtung zum Lebensmittel gut und ist der Temperatursensor gut von einer Querbeheizung durch eine Heizeinrichtung geschützt, ist beispielsweise nur eine geringe Korrektur nötig. In Versuchen hat sich gezeigt, dass die Verwendung einer auf Basis einer Eigenschaft des Küchengeräts oder des Temperatursensors korrigierten Steuergröße eine verbesserte Einstellung eines Soll-Drucks ermöglicht.

Beispielsweise reagieren unterschiedliche Lebensmittel unterschiedlich auf eine Druck- und/oder Temperaturänderung. Beispielsweise wird bei unterschiedlichen Lebensmitteln eine höhere oder niedrigere Temperaturänderung benötigt, um eine gewünschte Druckänderung zu bewirken. In Versuchen hat sich gezeigt, dass die Verwendung eines auf Basis einer Eigenschaft des Lebensmittels eine verbesserte Einstellung eines Soll-Drucks ermöglicht. Dagegen hat sich gezeigt, dass die Menge eines Lebensmittels lediglich die Dauer beeinflusst, bis die entsprechende Temperatur und der zugehörige Druck erreicht wird. Im Sinne der Erfindung werden einzelne Lebensmittel und beliebige Mischungen von Lebensmitteln unabhängig vom Aggregatzustand oder Verarbeitungsgrad als "Lebensmittel" bezeichnet.

Es hat sich gezeigt, dass insbesondere der Wärmeübergang oder Wärmetransport im Inneren des Lebensmittels Einfluss auf das Gleichgewicht zwischen Temperatur im Lebensmittel und Temperatur in der Dampfphase hat. Bei Lebensmitteln mit schlechtem Wärmeübergang bzw. Wärmetransport kann eine besonders große Differenz zwischen den genannten Temperaturen herrschen. Typischerweise sind dies Lebensmittel mit einer großen Viskosität und/oder Lebensmittel mit mindestens einer am Boden anhaftenden Schicht, beispielsweise aufgrund von Ansatz oder Anbrand.

Eine besonders gute Einstellung des Soll-Drucks wird ermöglicht, wenn beide genannten Korrekturen erfolgen.

In einer Ausführungsform wird eine Korrektur anhand eines oder mehrerer elektronisch hinterlegter Korrekturwerte, z. B. Korrekturfaktoren, durchgeführt. Beispielsweise kann im Rezept ein Korrekturwert hinterlegt sein und/oder die Steuereinrichtung kann Zugriff auf einen Datensatz mit Korrekturwerten haben.

Auch als Korrektur der Steuergröße ist die Korrektur des Soll-Drucks zu werten. Eine solche Korrektur spiegelt sich ebenso in einem geänderten Wert der Steuergröße wider. Es ist rechnerisch unerheblich, ob zuerst aus dem Soll-Druck eine Steuergröße ermittelt wird und anschließend die Steuergröße korrigiert wird oder ob der Soll-Druck korrigiert wird und daraus dann die Steuergröße ermittelt wird.

In einer Ausführungsform wird die Steuergröße mit einem von einer Eigenschaft des Temperatursensors und/oder des Lebensmittels abhängigen Korrekturfaktor multipliziert, um einen korrigierten Wert zu erhalten. In einer Ausführungsform sind Kalibrierungsmessungen durchgeführt worden, um Korrekturfaktoren zu ermitteln. Zum Beispiel sind mit unterschiedlich ausgebildeten, unterschiedlich angeordneten Temperatursensoren und/oder mit unterschiedlichen Lebensmitteln Messungen durchgeführt worden, um den Einfluss der jeweiligen Eigenschaft zu quantifizieren. Die Steuereinrichtung kann dazu eingerichtet sein, basierend auf einer Information über eine Eigenschaft des Temperatursensors und/oder des Lebensmittels einen geeigneten Korrekturfaktor auszuwählen und/oder zu ermitteln. Dies kann beispielsweise auf der Basis einer Nachschlagetabelle (engl. look-up table) und/oder mittels Inter- und/oder Extrapolation erfolgen.

In einer Ausgestaltung ist die Steuereinrichtung so eingerichtet, dass eine Differenz zwischen der mittels des Temperatursensors gemessenen Temperatur der Wand und der mittels des zweiten Temperatursensors gemessenen Temperatur im Bereich der Heizeinrichtung ermittelt wird. Insbesondere erfolgt die Korrektur der Steuergröße in Abhängigkeit der Eigenschaft des zu erhitzenden Lebensmittels unter Berücksichtigung der Differenz.

Die Differenz wird zur Korrektur des Temperatursensors in Abhängigkeit der Eigenschaft des zu erhitzenden Lebensmittels verwendet. Dies beruht auf der Erkenntnis, dass die Differenz ein Maß für den Wärmeübergang und/oder Wärmetransport im Inneren des Lebensmittels ist. Liegt eine große Differenz zwischen den Messwerten der beiden Temperatursensoren vor, ist also die Temperatur an der Heizeinrichtung deutlich größer als die Temperatur des Lebensmittels, kann die Wärme der Heizeinrichtung sich schlecht im Lebensmittel verteilen. In diesem Fall kann eine Korrektur dann z. B. derart erfolgen, dass ein größerer Korrekturfaktor gewählt wird, um dem schlechteren Wärmeübergang bzw. Wärmetransport Rechnung zu tragen. Es wird also eine etwas höhere Temperatur angestrebt, als im Gleichgewicht eigentlich notwendig wäre, damit dennoch der gewünschte Druck erreicht wird.

Insbesondere wird die Differenz in oder nahe einem Gleichgewichtszustand ermittelt. Mit anderen Worten muss nach Einstellung einer definierten Heizleistung für einen ausreichenden Zeitraum gewartet werden, damit sich die geänderte Temperatur der Heizeinrichtung in der Speise widerspiegelt.

In einer Ausführungsform ist das Küchengerät dazu eingerichtet, auf Basis eines elektronisch gespeicherten Rezepts eine Zubereitung einer Speise zumindest teilweise automatisch durchzuführen. Die Steuereinrichtung des Küchengeräts kann auf ein Rezept zugreifen und durch einen Rezeptschritt des Rezeptes veranlasst werden, eine Funktionskomponente wie beispielsweise die Heizeinrichtung, ein drehbares Werkzeug zum Zerkleinern und/oder Mischen einer Speise in dem Speisenzubereitungsgefäß oder einen Arm zur Verriegelung des Speisenzubereitungsgefäßes in einer durch den Rezeptschritt definierten Weise zu betreiben. Die Zubereitung einer Speise kann beispielsweise ein Erhitzen eines Lebensmittels und/oder ein Mischen oder Zerkleinern eines Lebensmittels umfassen. Das elektronisch gespeicherte Rezept kann einen oder mehrere Soll-Drücke enthalten. Das Küchengerät, insbesondere die Steuereinrichtung, kann dann in der Lage sein, auf den einen oder die mehreren Soll-Drücke zuzugreifen, um diesen wie beschrieben im Speisenzubereitungsgefäß einzustellen. Alternativ oder ergänzend kann das Küchengerät, insbesondere die Steuereinrichtung, in der Lage sein, auf einen oder mehrere vom Benutzer vorgegebenen Soll-Drücke zuzugreifen, um diesen wie beschrieben im Speisenzubereitungsgefäß einzustellen. Ein Soll-Druck kann z. B. in Form einer gewünschten Druckstufe im Rezept enthalten sein und/oder vom Benutzer vorgegeben werden.

In einer Ausgestaltung ist das Küchengerät dazu eingerichtet, anhand eines Messwerts des Temperatursensors eine Temperatur im Inneren des Speisenzubereitungsgefäßes zu regeln. Die Temperatur im Inneren des Speisenzubereitungsgefäßes meint insbesondere die Temperatur eines dort befindlichen Lebensmittels. In dieser Ausgestaltung wird der Temperatursensor nicht nur zur Beeinflussung des Drucks im Speisenzubereitungsgefäß verwendet, sondern zusätzlich auch zur Regelung der Temperatur. Es ist also nur ein Temperatursensor für zwei unterschiedliche Funktionen notwendig. Dabei ist nicht erforderlich, dass diese beiden Funktionen gleichzeitig oder im selben Rezept genutzt werden.

Beispielsweise kann zum Kochen von Kartoffeln ein Erhitzen unter erhöhtem Druck erfolgen, wobei ein Soll-Druck unter Verwendung des Messwerts des Temperatursensors eingestellt wird. Ein Reduzieren einer Sauce kann dagegen bei Atmosphärendruck erfolgen, wobei Messwerte des Temperatursensors genutzt werden können, um die Temperatur der Sauce auf eine vordefinierte Zieltemperatur zu regeln. Die Regelung der Temperatur kann beispielsweise beim Kochen, Anbraten oder Rösten erfolgen.

In einer Ausgestaltung ist das Küchengerät dazu eingerichtet, anhand eines Messwerts des Temperatursensors eine Temperatur im Inneren des Speisenzubereitungsgefäßes im Rahmen einer Sicherheitsabschaltung zu überwachen. Eine Sicherheitsabschaltung ist eine Abschaltung der Heizeinrichtung und ggf. weiterer Funktionskomponenten, die automatisch erfolgt, wenn die Temperatur im Inneren des Speisenzubereitungsgefäßes einen vorgegebenen Maximalwert überschreitet. Zu diesem Zweck kann die Steuereinrichtung den Messwert mit dem Maximalwert vergleichen, um bei Überschreiten des Maximalwerts die Sicherheitsabschaltung auszulösen.

In einer Ausgestaltung ist das Küchengerät eine Küchenmaschine. In einer Ausgestaltung weist das Küchengerät ein drehbares Werkzeug zum Zerkleinern und/oder Mischen einer Speise in dem Speisenzubereitungsgefäß auf.

Ein weiterer Aspekt der Erfindung ist ein Verfahren zum Erhitzen eines Lebensmittels unter erhöhtem Druck in einem Speisenzubereitungsgefäß, bei dem eine Temperatur einer Wand gemessen wird und unter Verwendung der gemessenen Temperatur ein Soll-Druck im Speisenzubereitungsgefäß eingestellt wird. Insbesondere wird das Verfahren in einem Küchengerät durchgeführt, bevorzugt in einem erfindungsgemäßen Küchengerät. Alle Merkmale, Ausgestaltungen und Vorteile des eingangs genannten Küchengeräts können analog für das Verfahren gelten und umgekehrt.

Das Verfahren kann ein Vorgeben eines Soll-Drucks umfassen. Beispielsweise können unterschiedliche Druckstufen vorgesehen sein, etwa 0,4 bar und 0,8 bar Überdruck. Zusätzliche und/oder wählbare Druckstufen sind möglich. Das Verfahren kann ein Ermitteln einer Dampftemperatur umfassen. Beispielsweise kann die Steuereinrichtung anhand des vorgegebenen Soll-Drucks eine Dampftemperatur in einer Nachschlagetabelle nachschlagen oder berechnen. Die Dampftemperatur kann als Soll-Temperatur dienen. Das Verfahren kann ein Ermitteln einer Steuergröße für eine Funktionskomponente umfassen, um einen Druck im Speisenzubereitungsgefäß zu beeinflussen. Das Verfahren kann ein Korrigieren der Steuergröße in Abhängigkeit einer Eigenschaft des Küchengeräts und/oder des Temperatursensors umfassen. Das Verfahren kann ein Korrigieren der Steuergröße in Abhängigkeit einer Eigenschaft des zu erhitzenden Lebensmittels umfassen. Das Verfahren kann ein Ausgeben einer Steuergröße an die Funktionskomponente umfassen. Das Verfahren kann ein Regeln des Drucks im Speisenzubereitungsgefäß umfassen, wobei der Messwert als Regelgröße verwendet werden kann.

Ein weiterer Aspekt der Erfindung ist eine Verwendung eines Temperatursensors, wobei der Temperatursensor eine Temperatur einer Wand des Speisenzubereitungsgefäßes misst, zur Einstellung eines Soll-Drucks in einem Speisenzubereitungsgefäß. Mit anderen Worten wird ein Messwert eines Temperatursensors, der die Temperatur einer Wand eines Speisenzubereitungsgefäßes misst, zur Einstellung eines Soll-Drucks in dem Speisenzubereitungsgefäß verwendet. Insbesondere ist das Speisenzubereitungsgefäß ein Speisenzubereitungsgefäß zum Erhitzen von Lebensmitteln unter erhöhtem Druck und/oder ein Speisenzubereitungsgefäß eines Speisenzubereitungsgeräts zum Erhitzen eines Lebensmittels unter erhöhtem Druck. Alle Merkmale, Ausgestaltungen und Vorteile des eingangs genannten Küchengeräts und des Verfahrens können analog für die Verwendung gelten und umgekehrt.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben ist. Die beanspruchten Schutzbereiche sind nicht auf die Ausführungsbeispiele beschränkt.

Es zeigen
- Figur 1:: Schichtsystem mit Heizleiter und Temperatursensoren;
- Figur 2:: Küchenmaschine;
- Figur 3:: Schichtsystem mit Heizleiter und Temperatursensoren;
- Figur 4:: Schnitt durch eine Wand eines Küchengeräts;
- Figur 5:: Schnitt durch eine Wand eines Küchengeräts;
- Figur 6:: Schnitt durch eine Wand eines Küchengeräts;
- Figur 7:: Schema zur Erläuterung der Dampftemperatur;
- Figur 8:: Zusammenhang zwischen Druck und Temperatur-Messwert;
- Figur 9:: Zusammenhang zwischen Druck und Temperatur-Messwert;
- Figur 10:: Einstellung unterschiedlicher Soll-Drücke;
- Figur 11:: Diagramm zum Erhitzen eines ersten Lebensmittels; sowie
- Figur 12:: Diagramm zum Erhitzen eines zweiten Lebensmittels.

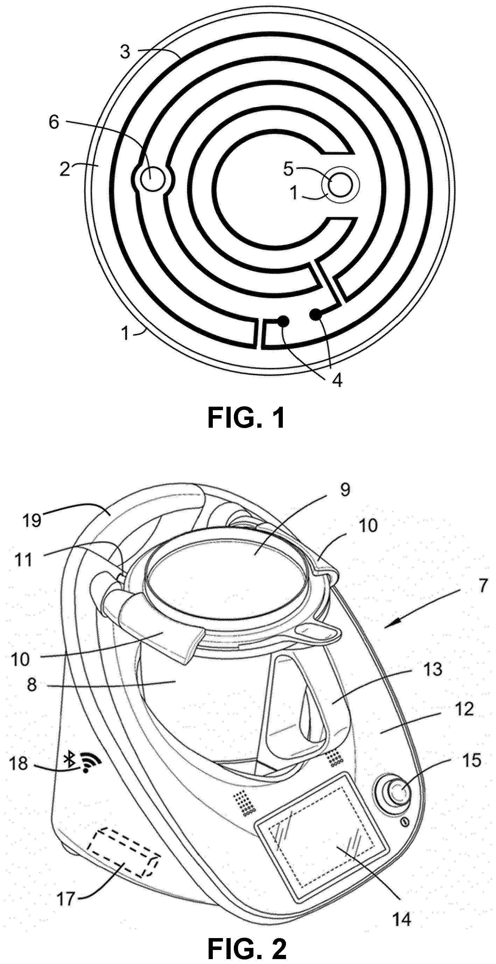

Die Figur 1 zeigt eine Aufsicht auf eine erste Schicht 1, auf der eine zweite Schicht 2 aufgebracht ist. Die erste Schicht 1 besteht aus einem anderen Material als die zweite Schicht 2. In der zweiten Schicht 2 befindet sich eine Öffnung, durch die hindurch die erste Schicht 1 zu sehen ist. Eine Heizeinrichtung 3 umfasst einen elektrischen Heizleiter mit elektrischen Kontakten 4. Der Heizleiter ist auf der zweiten Schicht 2 aufgebracht. Der Heizleiter kann eine Dickschichtheizung bilden. Der Heizleiter verläuft überwiegend entlang von kreisförmigen Bahnen, um die zweite Schicht 2 flächig erhitzen zu können. Der Heizleiter weist an seinen beiden Enden elektrische Kontakte 4 auf. Die elektrischen Kontakte 4 können mit einer Stromquelle für ein Erhitzen des Heizleiters verbunden werden. Ein Temperatursensor 5 befindet auf der ersten Schicht 1 innerhalb der Öffnung der zweiten Schicht 2. Der Temperatursensor 5 kontaktiert daher die erste Schicht 1. Der Rand der Öffnung der zweiten Schicht 2 berührt den Temperatursensor 5 nicht. Es gibt daher keinen Kontakt zwischen der zweiten Schicht 2 und dem Temperatursensor 5. Der Temperatursensor 5 ist entfernt von Bahnen des Heizleiters angeordnet. Ein optionaler zweiter Temperatursensor 6 befindet auf der zweiten Schicht 2 in unmittelbarer Nähe von zwei Bahnen des Heizleiters 3. Bahnen des Heizleiters können abschnittsweise kreisförmig um den zweiten Temperatursensor 6 herumgeführt sein, um Heizleitertemperaturen weiter verbessert durch den zweiten Temperatursensor ermitteln zu können. Der Abstand des zweiten Temperatursensors 6 zum Heizleiter ist geringer als der Abstand zwischen dem Temperatursensor 5 und dem Heizleiter.

Der Heizleiter kann mit einer elektrischen Isolierung versehen sein, die den Heizleiter von der zweiten Schicht 2 elektrisch trennt. Zwischen dem Heizleiter und der zweiten Schicht 2 kann eine elektrisch isolierende Schicht vorhanden sein. Auf dem Heizleiter oder oberhalb des Heizleiters ist zumindest eine weitere Schicht vorhanden, die eine äußere Schicht der Wand ist. Die erste Schicht 1 und zumindest die eine weitere Schicht können aus Stahl bestehen. Die zweite Schicht 2 kann aus Aluminium oder Kupfer bestehen. Insgesamt kann so eine Wand gebildet werden, die Teil eines Speisenzubereitungsgefäßes sein kann.

Abweichend von der Darstellung in der Figur 1 kann die gezeigte zweite Schicht 2 entfallen. Dadurch würde der Temperatursensor 6 auf der Schicht 1 positioniert sein, wobei dies dann keinen Einfluss auf die unterschiedlichen Abstände der beiden Temperatursensoren 5, 6 zu den Bahnen des Heizleiters hat.

Die Figur 2 zeigt eine Küchenmaschine als Beispiel für ein Küchengerät 7 mit einem Speisenzubereitungsgefäß 8. Auf dem Speisenzubereitungsgefäß 8 ist ein Deckel 9 aufgesetzt, um das Speisenzubereitungsgefäß 8 dicht zu verschließen, damit im Speisenzubereitungsgefäß ein Überdruck gebildet werden kann. Der Deckel 9 ist durch zwei Arme 10 verriegelt. Der Deckel 9 befindet sich zwischen den Armen 10. Die Arme 10 können um ihre Längsachse durch einen Motor der Küchenmaschine gedreht werden und so hin und her zwischen einer Öffnungsstellung und einer Verriegelungsstellung. Der Deckel 9 hat einen Sensor und zwar einen Kipphebel 11 eines elektrischen Schalters heruntergedrückt und so ausgelöst. Die Arme 10 und der Kipphebel 11 sind an einem Standteil 12 der Küchenmaschine angebracht. Das Speisenzubereitungsgefäß 8 ist in das Standteil 12 eingesetzt und kann aus dem Standteil 12 herausgenommen werden. Um das Speisenzubereitungsgefäß 8 herausnehmen zu können, umfasst dieses einen Griff 13. Das Standteil 12 umfasst zur Bedienung ein berührungsempfindliches Display 14 und einen Drehschalter 15. Der Drehschalter 15 kann gedreht und gedrückt werden. Display 14 und Drehschalter 15 sind also Bedienelemente der Küchenmaschine. Über die Bedienelemente 14 und 15 können Daten eingegeben werden, beispielsweise ein Soll-Druck oder eine gewünschte Druckstufe.

Im Standteil 12 befindet sich eine Steuereinrichtung 17. Im Standteil 12 befindet sich eine Funkeinrichtung 18, über die Daten drahtlos gesendet und empfangen werden können. Die Funkeinrichtung 18 kann beispielsweise per Bluetooth und/oder WiFi Daten senden sowie empfangen. Die Steuereinrichtung ist dazu eingerichtet, unter Verwendung eines Messwerts des Temperatursensors einen Soll-Druck im Speisenzubereitungsgefäß einzustellen. Die Steuereinrichtung 17 kann auf ein elektronisch gespeichertes Rezept zugreifen. Das Rezept kann extern gespeichert sein und/oder das Küchengerät kann über die Funkeinrichtung 18 darauf zugreifen. Die Steuereinrichtung 17 kann mithilfe des Rezepts die Zubereitung einer Speise steuern. Rezepte können alternativ oder ergänzend in einer Speichereinheit der Steuereinrichtung 17 gespeichert sein. Die Steuereinrichtung 17 kann den Betrieb der Küchenmaschine steuern. Die Steuereinrichtung 17 kann Informationen über Temperaturen von den beiden Temperatursensoren 5 und 6 erhalten. Die Steuereinrichtung 17 kann unter Verwendung der gemessenen Temperaturen die Zubereitung der Speise steuern. Insbesondere kann die Steuereinrichtung 17 die Heizleistung der Heizeinrichtung, also beispielsweise die Stromzufuhr zum Heizleiter, steuern. Die Steuereinrichtung 17 kann dazu eingerichtet sein, einen elektrischen Motor für das Werkzeug zu steuern, so zum Beispiel in Abhängigkeit von einem elektronisch gespeicherten Rezept.

Im Speisenzubereitungsgefäß 8 befindet sich ein Misch- und/oder Schneidwerkzeug, das mit einem Motor angetrieben werden kann. Der Motor befindet sich im Standteil 12. Die Heizeinrichtung ist im Grund des Speisenzubereitungsgefäßes 8 vorhanden. Die Heizeinrichtung kann mit dem Standteil 12 für ein Erhitzen stromleitend verbunden werden. Im Standteil ist außerdem der Motor für das Drehen der Arme 10 angeordnet.

Die Wand aus Figur 1 kann eine Wand des Speisenzubereitungsgefäßes 8 sein, insbesondere dessen Boden. Insbesondere wird die Wärme im Wesentlichen über die Wand an das Lebensmittel übertragen, in diesem Fall also über den Boden. Der Boden kann im Wesentlichen eben sein. Die Wand aus Figur 1 kann in der Mitte einen Durchgang für eine Welle aufweisen. Beispielsweise im Bereich der Welle können Abweichungen von der grundsätzlich ebenen Form vorhanden sein. Die Welle kann mit dem Misch- und/ oder Schneidwerkzeug verbunden sein und mit der Welle eines elektrischen Motors verbunden werden, wenn das Speisenzubereitungsgefäßes 8 in das Standteil 12 eingesetzt wird. Das Speisenzubereitungsgefäß 8 kann zudem eine Seitenwand aufweisen.

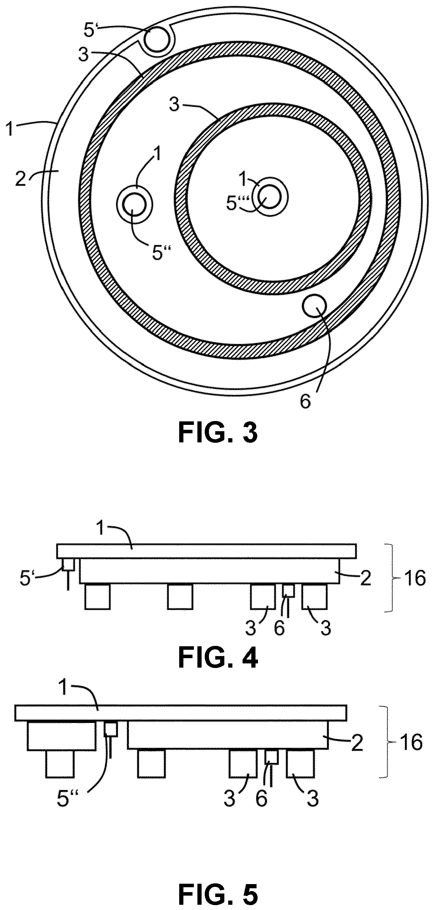

Die Figur 3 zeigt wie im Fall der Figur 1 eine Aufsicht auf eine erste Schicht 1, auf der eine zweite Schicht 2 aufgebracht ist. Zwei schematisch gezeigte Heizleiter einer elektrischen Heizeinrichtung 3 sind auf der zweiten Schicht 2 aufgebracht. Jeder Heizleiter verläuft kreisförmig. Jeder Heizleiter kann ein elektrischer Rohrheizkörper sein. Es kann sein, dass die beiden Heizleiter unabhängig voneinander bestromt werden können. Ein Heizleiter kann abweichend von der gezeigten Kreisform zumindest abschnittsweise oder vollständig bogenförmig verlaufen, so zum Beispiel wie ein Oval. Ein Heizleiter 3 kann abschnittsweise oder vollständig winkelförmig verlaufen. Ein Heizleiter 3 kann abschnittsweise oder vollständig geradlinig verlaufen. Ein Heizleiter 3 kann also auch zumindest abschnittsweise bogenförmig und/oder zumindest abschnittsweise geradlinig und/oder zumindest abschnittsweise winkelförmig verlaufen

Der eine Heizleiter weist einen großen Durchmesser bzw. eine große Ausdehnung auf und zwar im Vergleich zum Durchmesser bzw. der Ausdehnung des anderen Heizleiters. Der Heizleiter mit dem kleinen Durchmesser ist hier beispielhaft innerhalb des anderen Heizleiters außermittig angeordnet. Der Temperatursensor 5 ist so auf der ersten Schicht 1 angeordnet, dass dieser einen großen Abstand zu den beiden Heizleitern aufweist. Der Temperatursensor ist daher weitgehend thermisch entkoppelt von der Heizeinrichtung 3. Der zweite Temperatursensor 6 ist auf der zweiten Schicht 2 zwischen den beiden Heizleitern auf der rechten Seite angeordnet, damit der zweite Temperatursensor 6 einen geringen Abstand zu den beiden Heizleitern aufweist. Der zweite Temperatursensor 6 kann daher die Temperatur im Bereich der Heizeinrichtung messen.

Es werden drei verschiedene Anordnungen des Temperatursensors 5 gezeigt. Der Temperatursensor 5' kann sich außerhalb der beiden Heizleiter befinden. Der Temperatursensor 5' kann also beispielsweise am Rand der Wand angeordnet sein, um möglichst wenig einer Temperatur von Heizleitern ausgesetzt zu sein. Der Temperatursensor 5" kann sich mittig zwischen den beiden Heizleiter auf der links gezeigten Seite befinden. Der Temperatursensor 5‴ kann sich mittig innerhalb des Heizleiters mit dem kleinen Durchmesser befinden. Es können auch mehrere Temperatursensoren 5', 5", 5‴ vorhanden sein, die einen großem Abstand zu Heizleiterbahnen aufweisen und die sich auf der ersten Schicht 1 befinden. Es können auch mehrere zweite Temperatursensoren 6 vorhanden sein, die einen kleinen Abstand zu Heizleiterbahnen aufweisen.

Mit "klein" und "groß" ist gemeint, dass der eine kleine Abstand klein im Vergleich zu dem anderen großen Abstand ist. Entsprechendes gilt für den kleinen und den großen Durchmesser.

Die Figur 4 zeigt einen Schnitt durch die Wand 16 des Küchengeräts mit den zwei Schichten 1 und 2 für den Fall, dass es zwei kreisförmige Heizleiter gibt, wie diese in der Figur 3 gezeigt werden. Der Temperatursensor 5' ist auf der linken Seite außerhalb der beiden Heizleiter auf der ersten Schicht 1 angeordnet. Der zweite Temperatursensor 6 ist auf der rechten Seite zwischen den beiden Heizleitern auf der zweiten Schicht 2 angeordnet. Die Figur 4 verdeutlicht, dass der Temperatursensor 5' in einer anderen Ebene als der zweite Temperatursensor 6 angeordnet ist. Dies trägt dazu bei, dass mit dem Temperatursensor 5' auch während eines Erhitzens der Heizleiter die Temperatur recht genau ermittelt werden kann, denen Lebensmittel während ihrer Zubereitung ausgesetzt werden. Damit dies gut gelingt, kann der an den Temperatursensor 5', 5", 5‴ angrenzende Rand der zweiten Schicht 2 einen deutlichen Abstand zum Temperatursensor 5', 5", 5‴ aufweisen. Dieser Abstand kann mindestens 5 mm oder mindestens 7 mm betragen. Beispielsweise kann eine kreisrunde Öffnung in der zweiten Schicht 2 einen Durchmesser von 20 mm bis 30 mm haben. Der Durchmesser kann beispielsweise 25 mm groß sein. Innerhalb der Öffnung kann ein Temperatursensor angeordnet sein, dessen Durchmesser deutlich kleiner ist und beispielsweise kleiner als 14 mm oder kleiner als 10 mm ist.

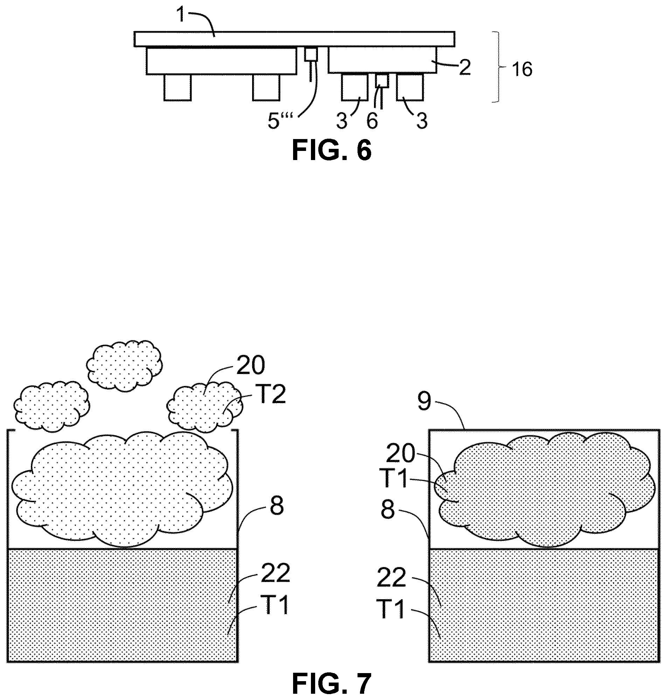

In der Figur 5 wird im Schnitt durch die Wand 16 der Fall skizziert, dass der Temperatursensor 5" zwischen den beiden kreisförmigen Heizleitern angeordnet ist, wie dies in der Figur 3 gezeigt wird. In der Figur 6 wird im Schnitt durch die Wand 16 der Fall skizziert, dass der Temperatursensor 5‴ mittig innerhalb des Heizleiters, der den kleinen Durchmesser aufweist, angeordnet ist. Der Temperatursensor 5 kann sich an einer anderen Stelle der Wand 16 befinden als die Heizeinrichtung 3 und auf einer anderen Höhe als die Heizeinrichtung 3.

Die Figur 7 zeigt schematisch, wie sich eine Dampftemperatur in einem links gezeigten offenen System und einem rechts gezeigten geschlossenen System einstellt. In beiden Fällen ist das Speisenzubereitungsgefäß 8 etwa zur Hälfte mit siedendem Wasser 22 mit einer ersten Temperatur T1 gefüllt. Im offenen System, das vergleichbar ist mit einem geöffneten Kochtopf, entsteht Dampf 20. Der Dampf 20 kann sich ungehindert ausbreiten und weist eine zweite Temperatur T2 auf, die geringer ist als die erste Temperatur T1 des Wassers 22.

Im geschlossenen System ist dagegen das Speisenzubereitungsgefäß 8 mit einem Deckel 9 dicht verschlossen. Entstehender Dampf 20 kann sich nicht frei ausbreiten, sodass sich im Speisenzubereitungsgefäß 8 ein Überdruck einstellt. Dies bewirkt, dass der Dampf 20 die erste Temperatur T1 annimmt, die auch das Wasser 22 aufweist.

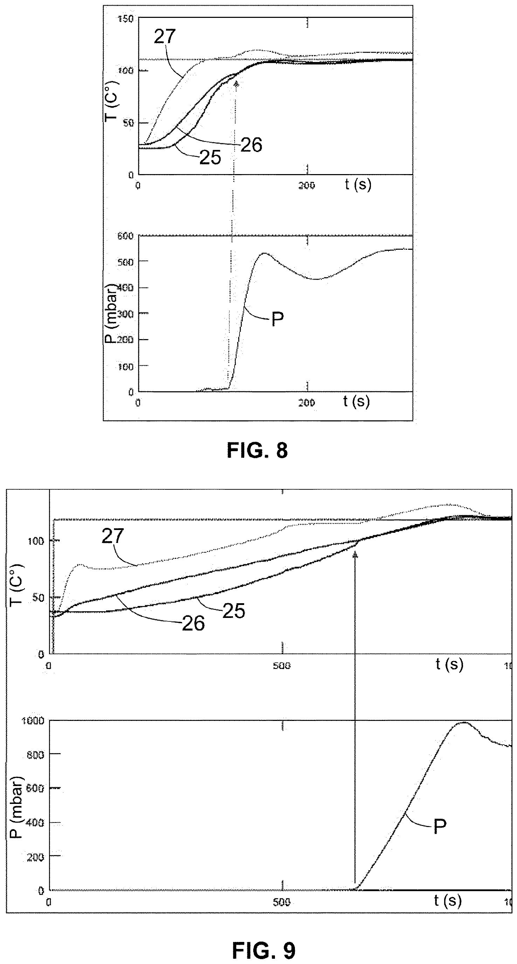

Figur 8 zeigt einen Zusammenhang zwischen dem Druck P und in Versuchen gemessenen Temperaturen in einem geschlossenen System. Das verwendete System umfasst ein Speisenzubereitungsgefäß mit einer Wand und einer Heizeinrichtung, einen Temperatursensor zum Messen der Temperatur der Wand, einen zweiten Temperatursensor zum Messen der Temperatur im Bereich der Heizeinrichtung sowie einen Druck- und einen Dampfsensor zum Messen des Drucks und der Temperatur im Dampf. Im Speisenzubereitungsgefäß befinden sich 200 g Wasser. Im oberen Diagramm sind unterschiedliche Temperaturen T über die Zeit t aufgetragen. Im unteren Diagramm ist der Druck P über die Zeit t aufgetragen. Die Zeitachse ist dieselbe.

Es zeigt sich, dass zunächst der Messwert 27 des zweiten Temperatursensors steigt und anschließend der Messwert 26 des Temperatursensors und der Messwert 25 des Dampfsensors. Die Messwerte steigen zunächst unabhängig voneinander. Ab einem gewissen Punkt baut sich ein Überdruck auf, was im unteren Diagramm und von dort mit einem aufwärts gerichteten, gestrichelten Pfeil gezeigt ist. Ab diesem Punkt nähern sich der Messwert 26 des Temperatursensors und der Messwert 25 des Dampfsensors rasch aneinander an und verlaufen gleich. Die mittels des Temperatursensors gemessene Temperatur kann also im druckbeaufschlagten System als Maß für den Dampfdruck verwendet werden.

Figur 9 zeigt ein ähnliches System, bei dem lediglich die Wassermenge von 200 g auf 3300 g erhöht worden ist. Im Vergleich zu Figur 8 sind die Temperaturverläufe zeitlich gestreckt, aber ansonsten kaum verändert. Die Übereinstimmung der Messwerte 25 und 26 des Temperatursensors und des Dampfsensors im druckbeaufschlagten System ist ebenso ersichtlich.

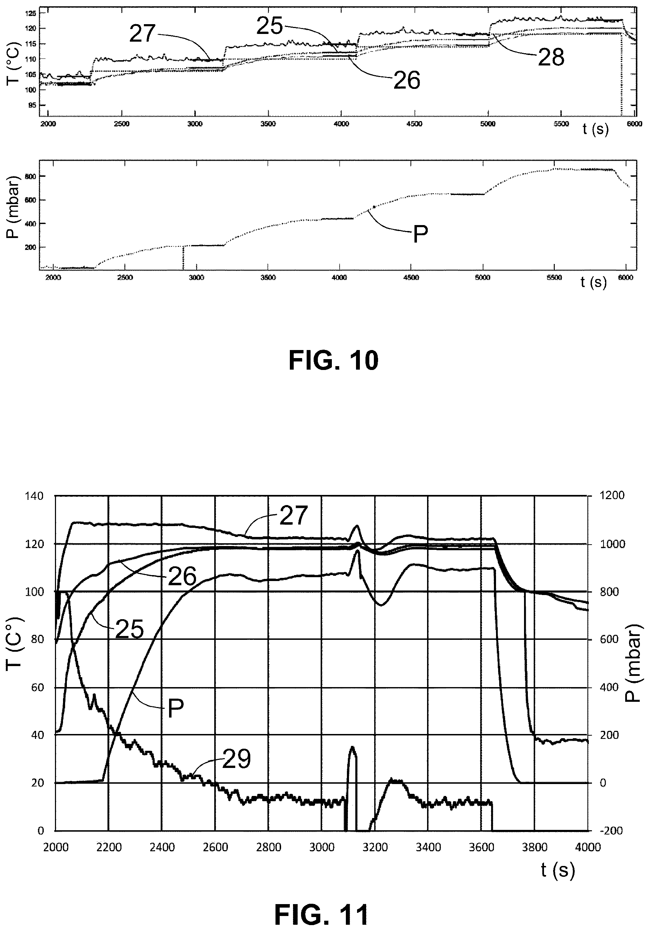

Figur 10 zeigt in einem ähnlichen System mit ebenfalls 3300 g Wasser ein Einstellen mehrerer abgestufter Soll-Drücke unter Verwendung von Messwerten des Temperatursensors 5. Es wird mittels des Temperatursensors ein Messwert 26 der Temperatur in der Wand des Speisenzubereitungsgefäßes gemessen. Dieser stimmt gut mit dem Messwert 25 des Dampfsensors überein. Die Steuereinrichtung stellt unter Verwendung des Messwerts des Temperatursensors einen Soll-Druck im Speisenzubereitungsgefäß ein. Es sind mehrere Soll-Drücke vorgesehen und je nach gewünschtem Soll-Druck wird eine bestimmte Soll-Temperatur 28 eingestellt. Die Soll-Temperatur 28 steigt von etwa 102°C um vier Stufen von etwa 4°C auf etwa 118°C an und fällt anschließend sprunghaft ab. Es ist ersichtlich, dass der Druck P sich ebenfalls stufenweise auf jeweils höhere Druckstufen, in diesem Beispiel auf 0,2, 0,4, 0,6 bzw. 0,8 bar, einstellt.

In einer Ausführungsform wählt die Steuereinrichtung auf Basis einer Nachschlagetabelle einen Korrekturfaktor zur Korrektur der Steuergröße aus. Die Nachschlagetabelle kann beispielsweise für unterschiedliche Lebensmittel unterschiedliche Korrekturfaktoren enthalten. So kann für viskose Lebensmittel und/oder Lebensmittel mit schlechtem Wärmetransport, beispielsweise für Milchreis oder Kartoffelpüree, ein höherer Korrekturfaktor hinterlegt sein als für Lebensmittel mit gutem Wärmetransport, beispielsweise für klare Brühe. Die Steuereinrichtung kann basierend auf einer Information über die zuzubereitende Speise, beispielsweise auf Basis des aktuell verwendeten elektronisch gespeicherten Rezepts, unter Verwendung der Nachschlagetabelle den geeigneten Korrekturfaktor auswählen und anwenden.

Alternativ oder ergänzend können in einer Nachschlagetabelle für unterschiedliche Eigenschaften des Speisenzubereitungsgefäßes und/oder des Temperatursensors wie Schichtdicken, Anordnung der Schichten, Materialien, Aufbau und ähnliches unterschiedliche Korrekturfaktoren vorgesehen sein. Die Steuereinrichtung kann basierend auf einer Information über das verwendete Küchengerät und/oder den verwendeten Temperatursensor unter Verwendung der Nachschlagetabelle den geeigneten Korrekturfaktor auswählen und anwenden. Eine solche Information kann beispielsweise gerätespezifisch sein und direkt in der Steuerungseinrichtung hinterlegt sein oder durch das Küchengerät ermittelt werden, beispielsweise durch einen Sensor. So ist es z. B. möglich, dass ein Sensor dazu eingerichtet ist, eine Bauart des Speisenzubereitungsgefäßes zu erkennen. Korrekturfaktoren, die die Eigenschaften des Küchengeräts und/oder Temperatursensors betreffen, können alternativ zur Nachschlagetabelle auch in der Steuereinrichtung direkt hinterlegt sein, beispielsweise in einer Speichereinheit der Steuereinrichtung.

Die Steuereinrichtung kann also die Steuergröße auf Basis der Speise, des Küchengeräts und/oder des Temperatursensors korrigieren. Die korrigierte Steuergröße wird zur Einstellung des Soll-Drucks im Speisenzubereitungsgefäß verwendet.

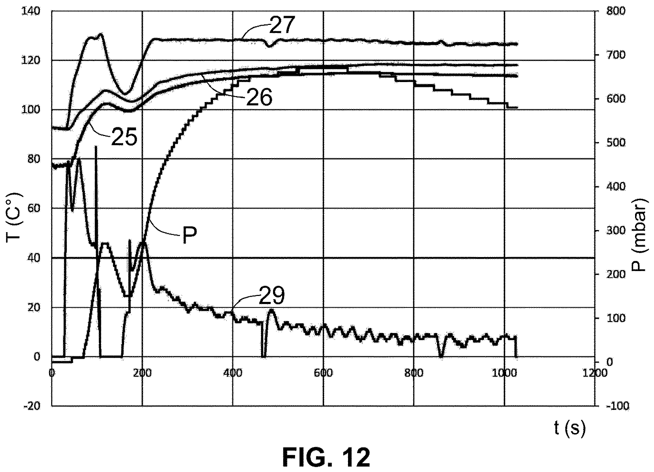

In den Figuren 11 und 12 sind Diagramme zum Erhitzen unterschiedlicher Lebensmittel gezeigt. In Figur 11 wird Gulasch bei einem Soll-Druck von 0,8 bar Überdruck zubereitet. Ab einem gewissen Druck stimmen die Messwerte 26 des Temperatursensors und die Messwerte des Dampfsensors 25 überein. Dies zeigt einen guten Wärmeübergang im Lebensmittel an. Dies zeigt sich auch im vergleichsweisen geringen Abstand von etwa 4°C zwischen dem Messwert 26 des Temperatursensors und dem Messwert 27 des zweiten Temperatursensors im Bereich der Heizeinrichtung. Der Soll-Druck wird erreicht bzw. überschritten. Ebenfalls dargestellt ist die Heizleistung 29.

In Figur 12 wird dagegen Risotto bei einem Soll-Druck von 0,8 bar Überdruck zubereitet. Durch einen schlechteren Wärmeübergang im Vergleich zum Gulasch sind die Messwerte des Dampfsensors 25 niedriger als die Messwerte 26 des Temperatursensors. Auch der Abstand zwischen dem Messwert 26 des Temperatursensors und dem Messwert 27 des zweiten Temperatursensors ist mit etwa 8°C doppelt so groß wie im Beispiel aus Figur 11. In der Folge wird der Soll-Druck von 0,8 bar (Überdruck) nicht erreicht, sondern es stellt sich lediglich ein Überdruck von 0,6 bar bis 0,7 bar ein. Hier müssen also die Messwerte des Temperatursensors in Abhängigkeit der Eigenschaften des zu erhitzenden Lebensmittels korrigiert werden.

## Patentansprüche

1. Küchengerät (7) für ein Erhitzen von Lebensmitteln unter erhöhtem Druck in einem Speisenzubereitungsgefäß (8), umfassend eine Wand (16), mindestens einen Temperatursensor (5) zum Messen der Temperatur der Wand (16) und eine Steuereinrichtung (17), wobei die Steuereinrichtung (17) dazu eingerichtet ist, unter Verwendung eines Messwerts des Temperatursensors (5) einen Soll-Druck im Speisenzubereitungsgefäß (8) einzustellen.

2. Küchengerät (7) nach Anspruch 1, **dadurch gekennzeichnet, dass** das Küchengerät (7) eine Heizeinrichtung (3) umfasst, wobei die Steuereinrichtung (17) dazu eingerichtet ist, einen Ist-Druck im Speisenzubereitungsgefäß (8) durch Steuern der Heizeinrichtung (3) zu beeinflussen.

3. Küchengerät (7) nach einem der vorhergehenden Ansprüche, **dadurch gekennzeichnet, dass** die Wand (16), in welcher der Temperatursensor (5) die Temperatur misst, ein Boden des Speisenzubereitungsgefäßes (8) ist.

4. Küchengerät (7) nach einem der zwei vorhergehenden Ansprüche, **dadurch gekennzeichnet, dass** mehrere Soll-Drücke vorgesehen sind und die Steuereinrichtung (17) so eingerichtet ist, dass je nach gewünschtem Soll-Druck eine bestimmte Soll-Temperatur vorgegeben wird.

5. Küchengerät (7) nach einem der drei vorhergehenden Ansprüche, **dadurch gekennzeichnet, dass** der Temperatursensor (5) und die Heizeinrichtung (3) thermisch im Wesentlichen entkoppelt sind.

6. Küchengerät (7) nach einem der vorhergehenden Ansprüche, **dadurch gekennzeichnet, dass** die Steuereinrichtung (17) den Druck im Speisenzubereitungsgefäß (8) regelt, wobei der Messwert des Temperatursensors (5) als Regelgröße verwendet wird.

7. Küchengerät (7) nach einem der fünf vorhergehenden Ansprüche, **dadurch gekennzeichnet, dass** die Wand (16) eine äußere erste Schicht (1) umfasst und der Temperatursensor (5) die erste Schicht (1) kontaktiert, wobei sich eine zweite Schicht (2) der Wand (16) zwischen der ersten Schicht (1) und der Heizeinrichtung (3) befindet.

8. Küchengerät (7) nach einem der sechs vorhergehenden Ansprüche, **dadurch gekennzeichnet, dass** ein zweiter Temperatursensor (6) vorhanden ist, um die Temperatur im Bereich der Heizeinrichtung (3) zu messen.

9. Küchengerät (7) nach einem der vorhergehenden Ansprüche, **dadurch gekennzeichnet, dass** die Steuereinrichtung (17) dazu eingerichtet ist, eine in Abhängigkeit einer Eigenschaft des Küchengeräts (7) oder des Temperatursensors (5) korrigierte Steuergröße auszugeben.

10. Küchengerät (7) nach einem der vorhergehenden Ansprüche, **dadurch gekennzeichnet, dass** die Steuereinrichtung (17) dazu eingerichtet ist, eine in Abhängigkeit einer Eigenschaft des zu erhitzenden Lebensmittels korrigierte Steuergröße auszugeben.

11. Küchengerät (7) nach dem vorhergehenden Anspruch und Anspruch 8, **dadurch gekennzeichnet, dass** die Steuereinrichtung (17) so eingerichtet ist, dass eine Differenz zwischen der mittels des Temperatursensors (5) gemessenen Temperatur der Wand (16) und der mittels des zweiten Temperatursensors (6) gemessenen Temperatur im Bereich der Heizeinrichtung (3) ermittelt wird und die Korrektur der Steuergröße in Abhängigkeit der Eigenschaft des zu erhitzenden Lebensmittels unter Berücksichtigung der Differenz erfolgt.

12. Küchengerät (7) nach einem der vorhergehenden Ansprüche, **dadurch gekennzeichnet, dass** das Küchengerät (7) dazu eingerichtet ist, anhand eines Messwerts des Temperatursensors (5) eine Temperatur im Inneren des Speisenzubereitungsgefäßes (8) zu regeln und/oder im Rahmen einer Sicherheitsabschaltung zu überwachen.

13. Küchengerät (7) nach einem der vorhergehenden Ansprüche, **dadurch gekennzeichnet, dass** das Küchengerät (7) eine Küchenmaschine ist und ein drehbares Werkzeug zum Zerkleinern und/oder Mischen einer Speise in dem Speisenzubereitungsgefäß aufweist.

14. Verfahren zum Erhitzen eines Lebensmittels unter erhöhtem Druck in einem Speisenzubereitungsgefäß (8), bei dem eine Temperatur einer Wand (16) gemessen wird und unter Verwendung der gemessenen Temperatur ein Soll-Druck im Speisenzubereitungsgefäß (8) eingestellt wird.

15. Verwendung eines Temperatursensors (5), wobei der Temperatursensor (5) die Temperatur einer Wand (16) eines Speisenzubereitungsgefäßes (8) misst, zur Einstellung eines Soll-Drucks in dem Speisenzubereitungsgefäß (8).
